# EUROPÄISCHE PATENTANMELDUNG

(11) **EP 2 284 345 A1**
(43) Veröffentlichungstag der Anmeldung: **16.02.2011**
(21) Anmeldenummer: 09165240.4
(22) Anmeldetag: 10.07.2009
(51) Int. Cl.: E05F 15/12, E05F 5/00, F16D 49/16, F16D 59/02, F16D 65/14, E05F 1/10

(54) **Bremsvorrichtung für eine Antriebseinrichtung zum Bewegen einer Tür und Antriebseinrichtung, die damit ausgestattet ist**

(71) Anmelder: VALEO Sicherheitssysteme GmbH, 85253 Erdweg (DE)
(72) Erfinder: Moez, Saad, 85253 Erdweg (DE); Orth, Dietmar, 85757 Karlsfeld (DE)
(74) Vertreter: Jacquot, Ludovic R. G.

(57) **Zusammenfassung**

Die vorliegende Erfindung betrifft eine Bremsvorrichtung (29) für eine Antriebseinrichtung zum Bewegen einer Tür (3), insbesondere einer Kraftfahrzeugtür wie zum Beispiel eine Seitentür, eine Heckklappe oder ein Heckdeckel, wobei die Antriebseinrichtung einen Motor aufweist, um die Tür (3) von einer ersten Stellung in eine zweite Stellung zu bewegen, wobei die Bremsvorrichtung (29) einen elektromagnetischen Aktuator (50) und mindestens ein Bremselement (52) aufweist, dessen Stellung vom Aktuator (50) zwischen einer geschlossenen Position, in der das Bremselement (52) auf einen Antriebstrang (60) bremsend einwirkt und einer geöffneten Position, bei der das Bremselement (52) in eine nicht bremsende Lage geführt ist gesteuert wird. Das Bremselement (52) umfasst mindestens eine hebelförmige Bremsbacke (52A, 52B), deren eines Ende um eine erste Schwenkachse (54) schwenkbar angebracht ist und deren anderes Ende (73) mit dem Aktuator (50) in der Weise kooperiert, dass im stromlosen Zustand des Aktuators die Bremsbacke (52A, 52B) sich in der geschlossenen Position befindet und im bestromten Zustand in der geöffneten Position.

## Beschreibung

Die Erfindung bezieht sich auf eine Bremsvorrichtung für eine Antriebseinrichtung zum Bewegen einer Tür, insbesondere einer Kraftfahrzeugtür, wobei der Begriff "Tür" im weiten Sinne zu verstehen ist und für ein Fahrzeug sowohl eine Seitentür, als auch eine Heckklappe oder einen Kofferraumdeckel umfasst, als auch zum Beispiel ein kippbares Garagentor. Die Erfindung bezieht sich auch auf eine Antriebseinrichtung, die mit einer solchen Bremsvorrichtung ausgestattet ist.

Antreibseinrichtungen für Fahrzeugtüren erfreuen sich immer größerer Beliebtheit, vor allem seit diese Antriebe nicht mehr hydraulisch, sondern nunmehr über einen Elektromotor angetrieben werden.

Dadurch sind solche Antriebe wesentlich leichter in Fahrzeuge einzubauen und können sogar als Option nachgerüstet werden. Auch können solche Antriebe schneller an neue Fahrzeugmodelle angepasst werden.

Bei Kraftfahrzeugen mit automatisch betätigbarer Fahrzeugtür oder Fahrzeugklappe (im folgenden auch zusammenfassend nur als Fahrzeugtür bezeichnet) wird beispielsweise vom Fahrer des Fahrzeuges durch eine entsprechende Betätigung eines in der Instrumententafel vorgesehenen Schalters die Fahrzeugtür geschlossen oder geöffnet. Hierzu wirkt das von dem Schalter erzeugte Schaltsignal auf eine elektronische Steuereinrichtung, die ihrerseits elektrische Steuersignale zur Aktivierung eines Elektromotors erzeugt, der dann seinerseits über ein nachgeschaltetes Getriebe und weitere Übertragungselemente die Fahrzeugtür verschwenkt oder verschiebt.

Nachteilig ist bei diesen bekannten Kraftfahrzeugen unter anderem, dass bei einem manuellen Zudrücken der Fahrzeugtür aufgrund des mit der Fahrzeugtür in Wirkverbindung stehenden Getriebes bzw. Elektromotors ein hoher Widerstand zu überwinden ist und ein erhöhter Verschleiß dieser Bauteile auftritt.

Zur Vermeidung eines derartigen Verschleißes ist bereits eine automatisch betätigbarer Fahrzeugtür vorgeschlagen worden, bei welcher der Motor bzw. das dem Motor nachgeschaltete Getriebe von der die Fahrzeugtür betätigenden Antriebswelle mittels einer elektromagnetischen Schaltkupplung entkuppelbar ist, so dass im ausgeschalteten Zustand der Schaltkupplung eine manuelle Betätigung der Fahrzeugtür möglich ist, ohne dass deren Bewegung durch die an der Antriebswelle der Kupplung angeordneten Baueinheiten (z. B. Elektromotor oder Zwischengetriebe) gehemmt wird.

Derartige elektromagnetische Schaltkupplungen sind in der Regel als reibschlüssige Schaltkupplungen ausgebildet und umfassen daher ein mit einem Reibbelag versehenes und mit einer ersten Welle drehfest verbundenes Rotorteil, an dem auf seiner dem Reibbelag abgewandten Seite eine elektrische Spule angeordnet ist, und eine drehfest, aber axial verschiebbar mit einer zweiten Welle verbundene Ankerscheibe, die im eingeschalteten Zustand der Schaltkupplung gegen den Reibbelag des Rotorteiles der ersten Welle gezogen wird und eine reibschlüssige Verbindung zwischen den beiden Wellen herstellt. Im abgeschalteten Zustand der Schaltkupplung werden die Ankerscheibe und das Rotorteil mittels einer Feder auseinandergedrückt, so dass zwischen Ankerscheibe und Reibbelag ein genau vorgegebener spaltförmiger Abstand besteht.

Diese Schaltkupplungen weisen daher den Nachteil auf, dass im nichtbestromten Fall aufgrund der offenen Kupplung die Fahrzeugtür zwar leicht beweglich ist, jedoch und diese Fahrzeugtür dann häufig unkontrolliert den auf sie wirkenden Kräften (Schwerkraft, Federn der Aufhängung, Dämpfern etc.) ausgesetzt ist, wenn sie sich in einer zwischen der geschlossenen und der geöffneten Stellung befindlichen Zwischenstellung befindet. Heckklappen werden bei Vorhandensein einer entsprechend starken Feder nach dem Öffnen der Kupplung in der Regel aus der Zwischenstellung in die geöffnete Endlage verschwenkt, obwohl die Fahrzeugtür aus Sicherheitsgründen häufig in der jeweiligen Zwischenposition stehenbleiben soll.

In der vorveröffentlichten deutschen Patentanmeldung Nr. 101 52 697.0 ist bereits eine Schaltkupplung vorgeschlagen worden, mittels welcher die Fahrzeugtür in jeder Zwischenposition sicher gehalten wird, wenn sich die Schaltkupplung in ihrem ausgeschalteten Zustand befindet, und mittels der auch eine manuelle Notbetätigung der Fahrzeugtür möglich ist. Hierzu ist ein elastisches Element, z. B. eine Druckfeder, vorgesehen, welches die Ankerscheibe der Schaltkupplung in axialer Richtung beaufschlagt, derart, dass die Ankerscheibe im ausgeschalteten Zustand der Schaltkupplung mit einer Kraft gegen den Reibbelag des Rotorteiles gedrückt wird, die groß genug ist, damit die Fahrzeugtür in der jeweiligen beim Ausschalten der Schaltkupplung eingenommenen Position sicher stehenbleibt. Hingegen soll bei einer anschließenden manuellen Betätigung der Fahrzeugtür der Reibschluss zwischen Ankerscheibe und Reibbelag überwindbar sein.

Als nachteilig hat sich bei dieser Schaltkupplung erwiesen, dass hohe Kräfte aufgewandt werden müssen, damit die Fahrzeugtür sicher stehen bleibt, was dazu führt die Herstellungskosten zu erhöhen.

Der Erfindung liegt die Aufgabe zugrunde, eine Bremsvorrichtung anzugeben, die günstig herzustellen ist bei geringem Bauraum und die mit großer Zuverlässigkeit arbeitet, um die Fahrzeugtür in jeder Zwischenposition sicher halten zu können.

Diese Aufgabe wird erfindungsgemäß hinsichtlich der Bremsvorrichtung durch die Merkmale des Anspruchs 1 gelöst. Weitere, besonders vorteilhafte Ausgestaltungen der Erfindung offenbaren die Unteransprüche.

Erfindungsgemäß wird vorgeschlagen eine Bremsvorrichtung für eine Antriebseinrichtung zum Bewegen einer Tür, insbesondere einer Kraftfahrzeugtür wie zum Beispiel eine Seitentür, eine Heckklappe oder ein Heckdeckel, wobei die Antriebseinrichtung einen Motor aufweist, um die Tür von einer ersten Stellung in eine zweite Stellung zu bewegen, wobei die Bremsvorrichtung einen elektromagnetischen Aktuator und mindestens ein Bremselement aufweist, dessen Stellung vom Aktuator zwischen einer geschlossenen Position, in der das Bremselement auf einen Antriebstrang bremsend einwirkt und einer geöffneten Position, bei der das Bremselement in eine nicht bremsende Lage geführt ist gesteuert wird, **dadurch gekennzeichnet, dass** das Bremselement mindestens eine hebelförmige Bremsbacke umfasst, deren eines Ende um eine erste Schwenkachse schwenkbar angebracht ist und deren anderes Ende mit dem Aktuator in der Weise kooperiert, dass im stromlosen Zustand des Aktuators die Bremsbacke sich in der geschlossenen Position befindet und im bestromten Zustand in der geöffneten Position.

Dadurch kann erreicht werden die Bremsvorrichtung die Tür in jeder Zwischenstellung gehalten werden.

Vorteilhafterweise umfasst das Bremselement zwei hebelförmige, eine Bremszange bildende Bremsbacken umfasst, die an der gleichen ersten Schwenkachse angelenkt sind und auf eine, drehfest mit dem Antriebsstrang verbundene Bremsscheibe einwirken können, wodurch genügend Bremskraft bei geringen Bauraum erreicht werden können.

Weiterhin wird vorgeschlagen, dass die Bremsvorrichtung Federelemente aufweist, die die Bremsbacken in Richtung der Bremsscheibe vorspannt, um so den sicheren Halt in der Zwischenstellung zu gewährleisten.

Nach einem weiteren Merkmal weist die Bremsvorrichtung einen vom Aktuator bewegbaren Steuernocken auf, der gleichzeitig mit den Enden der beiden Bremsbacken kooperieren kann, so dass eine große Kompaktheit erzielt werden kann.

Diese Kompaktheit wird noch weiterhin noch dadurch erhöht, dass der Steuernocken schwenkbar um eine zweite Schwenkachse angebracht ist, wobei die erste Schwenkachse, die Achse der Bremsscheibe und die zweite Schwenkachse auf einer Linie liegen.

Vorteilhafterweise weist der Steuernocken einen Steuerhebel auf, der mit dem Aktuator kooperiert.

In einem Ausführungsbeispiel ist der Steuernocken mit einem Federhebel ausgerüstet, der so angebracht ist, dass der Steuerhebel immer an einem Steuerende der Aktuators anliegt.

Nach einem weitem Aspekt der Erfindung stützt sich der Federhebel an einem Gehäuseteil der Bremsvorrichtung ab.

Vorteilhafterweise umfasst der Aktuator einen Solenoid, der einen stabförmigen, das Steuerende bildenden Anker umfasst.

Die Erfindung betrifft außerdem eine Antriebseinrichtung zum Bewegen einer Kraftfahrzeugtür wie zum Beispiel eine Seitentür, eine Heckklappe oder ein Heckdeckel, wobei die Antriebseinrichtung einen Motor aufweist, um die Tür von einer ersten Stellung in eine zweite Stellung zu bewegen, **dadurch gekennzeichnet, dass** sie eine Bremsvorrichtung wie oben definiert aufweist, die an der Ausgangswelle des Motors angebracht ist.

Dabei ist nach einem Merkmal die Federkraft der Federelemente so bemessen ist, dass die Bremsbacken in der geschlossenen Position eine Bremskraft aufbringen, die genügt die Fahrzeugtür in jeder Stellung zwischen einer vollständig geöffneten Stellung und einer vollständig geschlossenen Stellung zu halten.

Nach einem Ausführungsbeispiel weisen die Bremsscheibe und die mindestens eine Bremsbacke Bremsbeläge auf.

Nach einem anderen Ausführungsbeispiel kooperieren die Bremsscheibe und die mindestens eine Bremsbacke durch magnetische Bremsung miteinander.

Weitere erfindungsmäßige Merkmale und Vorteile ergeben sich aus den folgenden, anhand von Figuren erläuterten Ausführungsbeispielen. Es zeigen:
- Figur 1 zeigt ein Kraftfahrzeug, mit einer erfindungsmäßigen Antriebseinrichtung,
- Figur 2 zeigt die erfindungsmäßige Antriebseinrichtung im Längsschnitt,
- Figur 3 zeigt eine erfindungsmäßige Bremsvorrichtung in einer Perspektivansicht, und
- Figur 4 zeigt weitere Details der Bremsvorrichtung der Figur 3.

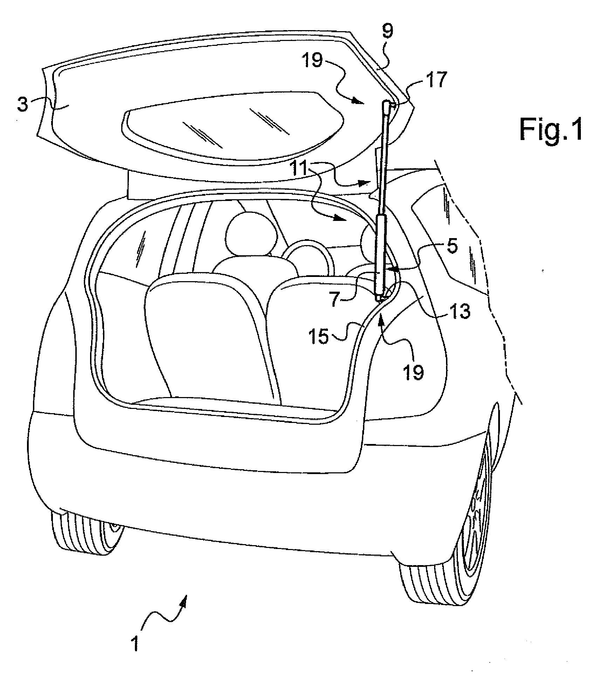

Die Figur 1 zeigt schematisch das Heck eines Kraftfahrzeugs 1 mit einer geöffneten Kraftfahrzeugtür 3, in diesem Falle eine Heckklappe, und einer erfindungsmäßigen Antriebseinheit 5, welche seitlich angebracht ist.

Im Zusammenhang mit dieser Erfindung wird unter Kraftfahrzeugtür sowohl eine Seitentür, eine Heckklappe oder ein Heckdeckel oder ein sonstiges bewegliches Verschlusselement der Karosserie verstanden. Die Erfindung kann natürlich auch auf eine Tür bzw. ein Tor mit einer entsprechenden Antriebseinheit angewendet werden, wie zum Beispiel ein Garagentor.

Durch die Antriebseinheit 5 kann die Heckklappe 3 von einer ersten in eine zweite Position bewegt werden. Vorteilhafterweise wird die Heckklappe 3 von der Antriebseinheit 5 von einer vollständig geschlossenen Stellung in eine vollständig geöffnete Stellung geschwenkt und gegebenenfalls wieder zurück. Natürlich ist auch jede Zwischenstellung möglich.

Dazu weist die Antriebseinrichtung ein teleskopartig ausfahrbares, aus einem ersten 7 und einem zweiten 9 Gehäuserohr gebildeten rohrförmiges Außengehäuse 11 auf, dessen eine Ende 13 an der Karosserie 15 des Kraftfahrzeugs 1 und dessen anderes Ende 17 an der Kraftfahrzeugtür / Heckklappe 3, zum Beispiel durch Kugelpfannenverbindungen 19 befestigt ist. Die Antriebseinrichtung ist somit an Stelle der sonst üblichen Gasfedern montiert.

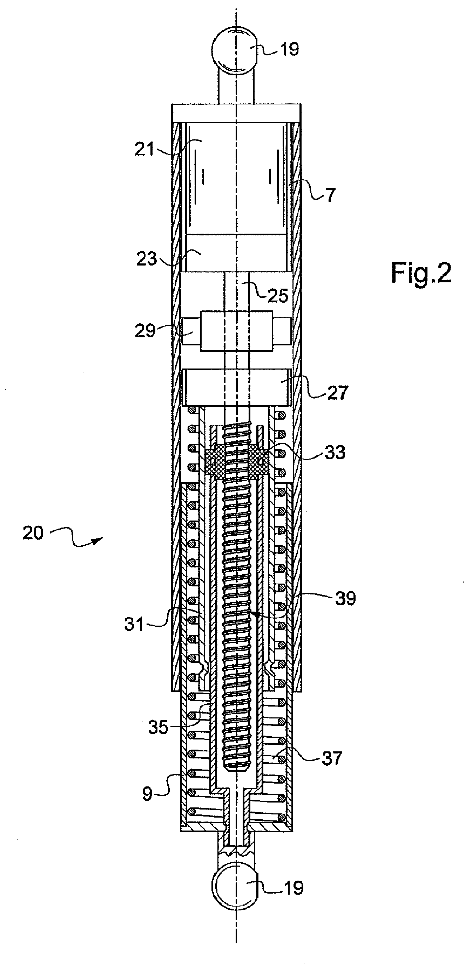

Wie in der Figur 2 ersichtlich, umfasst die Antriebseinheit 5 weiterhin einen Spindelantrieb 20 mit einem Elektromotor 21, dessen Ausgangswelle eine untersetzende, nicht selbstblockierende Getriebeeinheit 23 antreibt. An den Antrieb der Getriebeeinheit 23 ist eine Gewindespindel 25 angeschlossen, die von einem Lager 27 abgestützt wird. Zwischen dem Lager 27 und der Getriebeeinheit 23, an der Ausgangswelle des Motors 21 ist erfindungsgemäß eine Bremse 29 vorgesehen, die dazu benutzt wird, die Kraftfahrzeugtür in einer Zwischenstellung zu halten. Dank der Nähe zum Motor sind die aufzubringenden Bremskräfte gering.

Der Spindelantrieb 20 weist weiterhin eine drehfest in einem Führungsrohr 31 angeordnete Spindelmutter 33 auf. Bei Drehung der Spindel 25 führt die Spindelmutter 33 eine Translationsbewegung entlang der Spindelachse in den dafür vorgesehenen Führungen des Führungsrohrs 31 aus.

In dem hier dargestellten Ausführungsbeispiel ist ein Schubelement in Form eines Schubrohres 35 vorgesehen, dessen eines Ende eine Spindelmutter 33 trägt und dessen anderes Ende mit dem zweiten Gehäuserohr 9, als auch mit der dazugehörigen Befestigung, zum Beispiel die Kugelpfannenverbindung 19, verbunden ist, so dass die Translationsbewegung der Spindelmutter 33 sich auf das Schubrohr 35 überträgt, und somit die Gehäuserohre 7 und 9 sich teleskopartig relativ zueinander bewegen, um die Kraftfahrzeugtür von der ersten in die zweite Stellung zu bewegen.

In dem Außengehäuse 11 ist eine Schraubendruckfeder 37 zur Kraftunterstützung des Spindelantriebs 20 beim Auseinanderfahren der Gehäuserohre 7 und 9 gelagert.

Diese Schraubendruckfeder 37 umgibt das Führungsrohr 31 der Spindelmutter 33 und wird von dieser geführt, zum Beispiel um ein Einknicken zu verhindern.

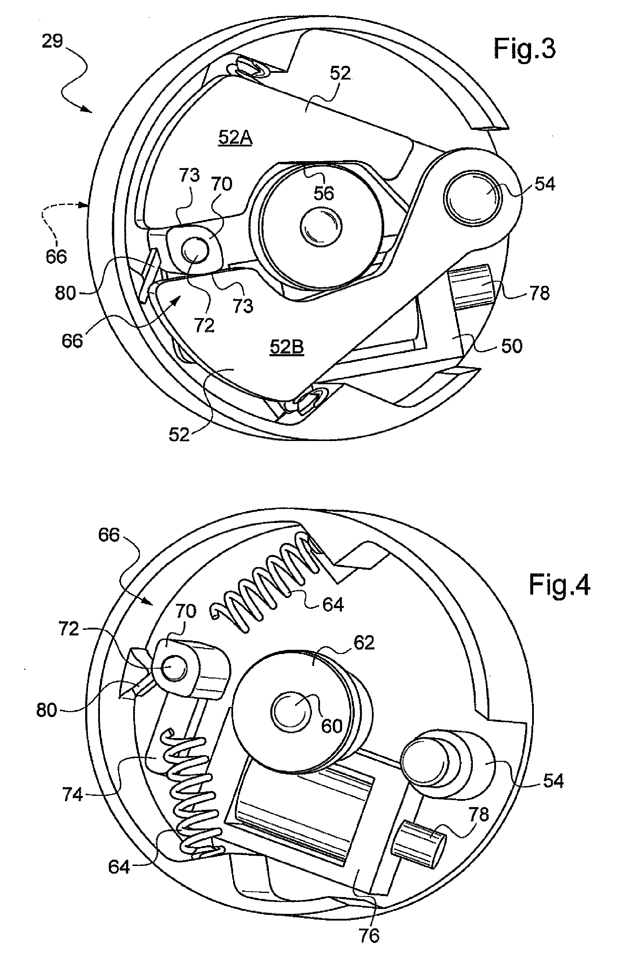

Die erfindungsgemässe Bremsvorrichtung wird nun im Zusammenhang mit den Figuren 3 und 4 näher beschrieben.

Die Bremsvorrichtung 29 weist einen elektromagnetischen Aktuator 50 und mindestens einem, in diesem Falle zwei hebelförmige Bremselemente 52 auf, die vorzugsweise von zwei hebelförmigen, eine Bremszange bildende Bremsbacken 52 A und 52 B gebildet sind.

Die beiden Bremsbacken 52A und 52B sind an der gleichen ersten Schwenkachse 54 angelenkt, und so angebracht, dass sie über z. B. Bremsbeläge 56 aufweisende Innenseiten 58 und auf eine, drehfest mit dem Antriebsstrang 60 verbundene und ebenfalls Bremsbeläge aufweisende Bremsscheibe 62 einwirken können.

In einer nicht dargestellten alternativen Ausführungsform kooperieren die Bremsscheibe und die mindestens eine Bremsbacke durch magnetische Bremsung miteinander. Dies kann dadurch erreicht werden, dass sowohl die Bremsscheibe als auch die Bremsbacke alternierend magnetische Nord- und Südpole aufweist, wobei die Bremsung durch die aufzubringenden Kräfte zur Überwindung der Magnetkräfte erzielt wird.

Die Stellung der Bremselemente 52, insbesondere der Bremsbacken 52A und 52B wird durch den Aktuator 50 gesteuert.

Dazu sind einerseits Federelemente 64, zum Beispiel in Form von Druckfedern vorgesehen, die sich einerseits an einer Gehäusewand 66 der Bremsvorrichtung 29 und andererseits and den Bremsbacken 52A et 52B abstützen und so die Bremsbacken 52A und 52B in Richtung der Bremsscheibe 62 vorspannen und gegen diese drücken.

Die Federkraft der Federelemente ist so bemessen, dass die Bremsbacken in der geschlossenen Position eine Bremskraft aufbringen, die genügt die Fahrzeugtür in jeder Stellung zwischen einer vollständig geöffneten Stellung und einer vollständig geschlossenen Stellung zu halten

In dieser, auf der Figur 3 dargestellten, geschlossenen Stellung wirkt das Bremselement 52 auf den Antriebstrang bremsend ein.

Die geöffnete Stellung kann über einen vom Aktuator 50 bewegbaren Steuernocken 70 erreicht werden.

Dieser Steuernocken 70 ist schwenkbar um eine zweite Schwenkachse 72 angebracht und liegt mit der ersten Schwenkachse 54 und der Achse der Bremsscheibe 62 auf einer Linie, wodurch eine große Kompaktheit erzielt werden kann.

Der Steuernocken 70 besitzt ungefähr die Form einer Raute, wobei zwei Ecken der Raute abgerundet sind. Die beiden Flächen, welche durch eine abgerundete Ecke miteinander verbunden sind definieren die jeweils eine Steuerfläche, Dadurch erhält man zwei Steuerflächen, welche gleichzeitig mit Enden 73 der beiden Bremsbacken 52A und 52B kooperieren.

Der Steuernocken 70 weist einen einteilig mit dem Nocken 70 gefertigten Steuerhebel 74 auf, der mit dem Aktuator 50 kooperiert.

Dazu besitzt der Aktuator 50 vorzugsweise einen Solenoid 76 mit einem stabförmigen, auf den Steuerhebel 74 wirkenden und somit ein Steuerende bildenden Anker 78.

Der Steuernocken 70 weist außerdem noch einen, ebenfalls einteilig gefertigten Federhebel 80 auf, der so angebracht ist, dass der Steuerhebel 74 immer an dem Steuerende der Aktuators 50 anliegt.

Vorteilhafterweise stützt sich der Federhebel an einem Gehäuseteil 66 der Bremsvorrichtung abstützt.

Im Folgenden wird auf die Funktionsweise der erfindungsmäßigen Bremsvorrichtung eingegangen.

Im nicht bestromten Zustand des Aktuators 50 befindet sich dieser in der Stellung wie in den Figuren 3 und 4 dargestellt.

Der Steuerhebel 74 liegt am Anker 78 an und der Steuernocken 70 ist so gedreht, dass die eine Zange bildenden Bremsbacken 52A und 52B bremsend auf den Antriebstrang der Antriebseinrichtung einwirken.

Im bestromten Zustand drückt der Anker 78 des Aktuators 50 den Steuerhebel 74 entgegen der vom Federhebel 80 ausgeübten Kraft und dreht so den Steuernocken 70, was dazu führt, dass die eine Zange bildenden Bremsbacken sich öffnen und der Antriebstrang sich frei drehen kann.

Die erfindungsgemässe Bremseinrichtung zeichnet sich durch seine Kompakheit aus. Dadurch, dass sie an der Ausgangswelle des Motors angebracht ist, sind die aufzubringenden Bremskräfte relativ gering. Bei Stromausfall ist diese Bremse aktiv, so dass etwaige Unfälle durch unkontrollierte Bewegungen der Kraftfahrzeugtür effizient vermieden werden können.

## Patentansprüche

1. Bremsvorrichtung (29) für eine Antriebseinrichtung zum Bewegen einer Tür (3), insbesondere einer Kraftfahrzeugtür wie zum Beispiel eine Seitentür, eine Heckklappe oder ein Heckdeckel, wobei die Antriebseinrichtung einen Motor aufweist, um die Tür (3) von einer ersten Stellung in eine zweite Stellung zu bewegen, wobei die Bremsvorrichtung (29) einen elektromagnetischen Aktuator (50) und mindestens ein Bremselement (52) aufweist, dessen Stellung vom Aktuator (50) zwischen einer geschlossenen Position, in der das Bremselement (52) auf einen Antriebstrang (60) bremsend einwirkt und einer geöffneten Position, bei der das Bremselement (52) in eine nicht bremsende Lage geführt ist gesteuert wird, **dadurch gekennzeichnet, dass** das Bremselement (52) mindestens eine hebelförmige Bremsbacke (52A, 52B) umfasst, deren eines Ende um eine erste Schwenkachse (54) schwenkbar angebracht ist und deren anderes Ende (73) mit dem Aktuator (50) in der Weise kooperiert, dass im stromlosen Zustand des Aktuators die Bremsbacke (52A, 52B) sich in der geschlossenen Position befindet und im bestromten Zustand in der geöffneten Position.

2. Bremsvorrichtung für eine Antriebseinrichtung zum Bewegen einer Tür nach Anspruch 1, **dadurch gekennzeichnet, dass** das Bremselement (52) zwei hebelförmige, eine Bremszange bildende Bremsbacken (52A, 52B) umfasst, die an der gleichen ersten Schwenkachse (54) angelenkt sind und auf eine, drehfest mit dem Antriebsstrang (62) verbundene Bremsscheibe (62) einwirken können.

3. Bremsvorrichtung nach Anspruch 2, **dadurch gekennzeichnet, dass** sie Federelemente (64) aufweist, die die Bremsbacken (52A, 52B) in Richtung der Bremsscheibe (62) vorspannt.

4. Bremsvorrichtung nach Anspruch 2 oder 3, **dadurch gekennzeichnet, dass** sie einen vom Aktuator (50) bewegbaren Steuernocken (70) aufweist, der gleichzeitig mit den Enden (73) der beiden Bremsbacken (52A, 52B) kooperieren kann.

5. Bremsvorrichtung nach Anspruch 4, **dadurch gekennzeichnet, dass** der Steuernocken (70) schwenkbar um eine zweite Schwenkachse (72) angebracht ist, wobei die erste Schwenkachse (64), die Achse (60) der Bremsscheibe (62) und die zweite Schwenkachse (72) auf einer Linie liegen.

6. Bremsvorrichtung nach Anspruch 5, **dadurch gekennzeichnet, dass** der Steuernocken (70) einen Steuerhebel (74) aufweist, der mit dem Aktuator (50) kooperiert.

7. Bremsvorrichtung nach Anspruch 6, **dadurch gekennzeichnet, dass** der Steuernocken (70) einen Federhebel (80) aufweist, der so angebracht ist, dass der Steuerhebel (74) immer an einem Steuerende der Aktuators (50) anliegt.

8. Bremsvorrichtung nach Anspruch 7, **dadurch gekennzeichnet, dass** sich der Federhebel (80) an einem Gehäuseteil (66) der Bremsvorrichtung abstützt.

9. Bremsvorrichtung nach einem der Ansprüche 1 bis 8, **dadurch gekennzeichnet, dass** der Aktuator (50) einen Solenoid (76) umfasst, der einen stabförmigen, das Steuerende bildenden Anker (78) umfasst.

10. Antriebseinrichtung zum Bewegen einer Kraftfahrzeugtür wie zum Beispiel eine Seitentür, eine Heckklappe oder ein Heckdeckel, wobei die Antriebseinrichtung einen Motor (21) aufweist, um die Tür von einer ersten Stellung in eine zweite Stellung zu bewegen, **dadurch gekennzeichnet, dass** sie eine Bremsvorrichtung (29) nach einem der Ansprüche 1 bis 9 aufweist, die an der Ausgangswelle des Motors angebracht ist.

11. Antriebseinrichtung nach Anspruch 10 zusammen mit einer Bremsvorrichtung nach Anspruch 3, **dadurch gekennzeichnet, dass** die Federkraft der Federelemente so bemessen ist, dass die Bremsbacken in der geschlossenen Position eine Bremskraft aufbringen, die genügt die Fahrzeugtür in jeder Stellung zwischen einer vollständig geöffneten Stellung und einer vollständig geschlossenen Stellung zu halten.

12. Antriebseinrichtung nach Anspruch 10 oder 11, **dadurch gekennzeichnet, dass** die Bremsscheibe (62) und die mindestens eine Bremsbacke (52A, 52B) Bremsbeläge aufweisen.

13. Antriebseinrichtung nach Anspruch 10 oder 11, **dadurch gekennzeichnet, dass** die Bremsscheibe und die mindestens eine Bremsbacke durch magnetische Bremsung miteinander kooperieren.
